# EUROPEAN PATENT APPLICATION

(11) **EP 4 489 255 A2**
(43) Date of publication of application: **08.01.2025**
(21) Application number: 24179313.2
(22) Date of filing: 31.05.2024
(51) Int. Cl.: H02J 7/00

(54) **RECHARGEABLE BATTERY DEVICE AND ASSOCIATED STATION, WITH INTERLOCKING DEVICE**

(30) Priority: 15.06.2023 IT 202300012342
(71) Applicant: Stiga S.p.A., 31033 Castelfranco Veneto (TV) (IT)
(72) Inventor: VILLANOVA, Marco, 31020 Sernaglia della Battaglia (TV) (IT)
(74) Representative: PGA S.p.A.

(57) **Abstract**

The present disclosure relates to a parking installation (10, 10a, 10b) for a device (1) with rechargeable batteries, preferably for gardening and/or agriculture, comprising:
- a body, and
- a power supply unit (11) configured to power, in use, at least a first rechargeable battery (4) of said device (1) with rechargeable batteries, preferably for gardening and/or agriculture,
- an engagement element (12) adapted to removably accommodate at least part of said device (1) with rechargeable batteries in at least one predefined positional relationship with respect to said body;
wherein the parking installation (10, 10a, 10b) comprises an interlocking device (30, 6k), configured to inhibit a power supply of an electrical power user (3) of said device (1) with rechargeable batteries from said at least a first rechargeable battery (4) when said device (1) with rechargeable batteries is removably connected on said engagement element (12).

The present disclosure also relates to a corresponding device (1) with rechargeable batteries, preferably for gardening and/or agriculture, provided with an equivalent interlocking device.

## Description

### Technical field

The present disclosure relates to the field of devices for charging batteries and also relates to the field of devices, in particular for gardening and/or agriculture, provided with rechargeable batteries.

### Prior art

Devices are known for gardening and/or agriculture which are provided with rechargeable batteries. The rechargeable batteries are intended to power a power user of the device for gardening and/or agriculture. Rechargeable batteries are also present in further devices not intended for gardening and/or agricultural applications.

The rechargeable batteries supply power actuators which are intended to move a tool of the device, e.g., a spindle of a drill or a mowing head of a brush cutter.

Battery chargers for rechargeable batteries are also known which are configured to allow to charge rechargeable batteries when these are housed on said devices.

The electronics of the battery chargers are sized so as to be able to provide power for charging the rechargeable batteries; in particular, it is known that the battery chargers are sized so as to be as small as possible, and this for reasons of size, weight, and production costs.

There are also reception stations which allow to house, and in particular to hang, rechargeable battery devices, including devices for gardening and/or agriculture.

### Summary

The Applicant, having observed the existence of a risk for the operator where the power user is driven involuntarily, and having observed the existence of a risk for the electronics of the battery charger, has conceived a parking and/or charging installation for rechargeable battery devices and a corresponding rechargeable battery device which are provided with an interlocking device so as to prevent the actuation of the power user when the battery charger is operatively connected with the rechargeable battery device.

The salient features of the parking and/or charging installation and the rechargeable battery device are disclosed herein in some aspects, which can be combined with each other and/or with portions of the detailed disclosure and/or the claims.

In accordance with the present disclosure, a parking and/or charging installation (10, 10a, 10b) for a device (1) with rechargeable batteries is disclosed herein, preferably for gardening and/or agriculture, comprising:
- a casing,
- a power supply unit (11) at least partially housed in said casing and configured to power, in use, at least one rechargeable battery (4) of said device (1),
- an engagement element (12), in particular a housing, associated with said casing and configured to establish a removable engagement with at least part of said device (1) with rechargeable batteries in at least one predefined positional relationship with respect to said casing so as to establish a removable connection condition between said installation and said device (1),
characterized in that said installation further comprises an interlocking device (30, 6k), configured to inhibit a power supply of an electrical power user (3) of said device (1) by said at least one rechargeable battery (4) when said device (1) is removably connected to said installation.

According to a further non-limiting aspect, in accordance with the preceding aspect, said parking and/or charging installation (10, 10a, 10b) is configured to exhibit an operating configuration of use, in which said interlocking device (30, 6k) enables the power supply of the power user (3) by said at least one rechargeable battery (4).

According to a further non-limiting aspect, in accordance with any one of the preceding aspects, said parking and/or charging installation (10, 10a, 10b) is configured to exhibit a charging operating configuration, alternative to said operating configuration of use, in which said interlocking device (30, 6k) inhibits the power supply of the power user (3) by said at least one rechargeable battery (4).

According to a further non-limiting aspect, in accordance with any one of the preceding aspects, said interlocking device (30, 6k) is an electrical interlocking device.

According to a further non-limiting aspect, in accordance with any one of the preceding aspects, said interlocking device (30, 6k) interrupts, in said charging operating configuration, at least one flow of electric current towards said power user (3).

According to a further non-limiting aspect, in accordance with any one of the preceding aspects, the interlocking device (30, 6k) is particularly configured to keep the power supply of the electrical power user (3) of said device (1) by said at least one rechargeable battery (4) inhibited as long as said device (1) is kept connected to said installation.

According to a further non-limiting aspect, in accordance with any one of the preceding aspects, said interlocking device (30, 6k) comprises:
- a mechanical switch (30) and/or
- an electronic switch (6k).

According to a further non-limiting aspect, in accordance with the preceding aspect, said electronic switch (6k) is or comprises one among a relay switching circuit, a solid state transistor, a field effect transistor, in particular a MOS, an IGBT, a thyristor.

According to a further non-limiting aspect, in accordance with any one of the preceding aspects, said interlocking device (30, 6k), in particular said mechanical switch (30) and/or said electronic switch (6k), is operatively interposed between said at least one rechargeable battery (4) and said power user (3) or is placed in series with said at least one rechargeable battery (4).

According to a further non-limiting aspect, in accordance with any one of the preceding aspects, said interlocking device (30, 6k), in particular said mechanical switch (30) and/or said electronic switch (6k), is switchable between a closed configuration in which said at least one rechargeable battery (4) can power said power user (3), and an open configuration in which said at least one rechargeable battery (4) cannot supply power, and is electrically disconnected from, said power user (3).

According to a further non-limiting aspect, in accordance with any one of the preceding aspects, said power supply unit (11) is configured to power a battery charging unit (6) of said device (1) with an electrical signal intended to charge at least one battery of said device (1).

According to a further non-limiting aspect, in accordance with any one of the preceding aspects, said power supply unit (11) comprises a first electronic conditioning circuit of said electrical signal.

According to a further non-limiting aspect, according to the preceding aspect, said first electronic conditioning circuit is configured to cooperate with a second conditioning circuit of said electrical signal, said second conditioning circuit of said electrical signal being accommodated on said battery charging unit (6).

According to a further non-limiting aspect, in accordance with any one of the six preceding aspects, said relay is a solid-state relay.

According to a further non-limiting aspect, in accordance with any one of the eight preceding aspects, said electronic switch (6k), preferably said relay switching circuit, is powered by the power supply unit (11).

According to a further non-limiting aspect, in accordance with any one of the nine preceding aspects, said electronic switch (6k), preferably said relay switching circuit, is powered in direct current or direct voltage.

According to a further non-limiting aspect, in accordance with any one of the ten preceding aspects, said electronic switch (6k), preferably said relay switching circuit, is powered by a voltage lowering transformer and/or a voltage rectifier of said power supply unit (11).

According to a further non-limiting aspect, in accordance with any one of the eleven preceding aspects, said electronic switch (6k) is integrated in said battery charging unit (6).

According to a further non-limiting aspect, in accordance with any one of the preceding aspects, said engagement element (12) comprises at least one of a guide, a recess, a protrusion.

According to a further non-limiting aspect, in accordance with any one of the preceding aspects, said engagement element (12) comprises an abutment (12r) defining an operating mutual coupling position in which said rechargeable battery device (1) is in a predefined spatial arrangement with said parking and/or charging installation (10, 10a, 10b).

According to a further non-limiting aspect, in accordance with any one of the preceding aspects, the power supply unit (11) is a wireless power supply unit comprising an electrical energy transfer element for electromagnetic coupling (11m) and/or is a power supply unit for direct electrical coupling comprising an electrical energy transfer element for direct electrical coupling (11e).

According to a further non-limiting aspect, according to the preceding aspect, said electrical energy transfer element for electromagnetic coupling (11m) and/or electrical energy transfer element for direct electrical coupling (11e) transfers, in use, electrical energy for wireless electromagnetic coupling and/or for direct contact.

According to a further non-limiting aspect, in accordance with any one of the two preceding aspects, said engagement element (12) houses said electrical energy transfer element for electromagnetic coupling (11m) and/or said electrical energy transfer element for direct electrical coupling (11e), preferably in a protected position.

According to a further non-limiting aspect, in accordance with any one of the preceding aspects, said parking and/or charging installation (10, 10a, 10b), in particular said engagement element (12), is configured to support the weight of said rechargeable battery device (1).

According to a further non-limiting aspect, in accordance with any one of the preceding aspects, said interlocking device (30, 6k) and, preferably, said mechanical switch (30) and/or said electronic switch (6k), is arranged at said at least one of a guide, a recess, a protrusion.

According to a further non-limiting aspect, in accordance with any one of the nineteen preceding aspects, said mechanical switch (30) is compressed when said rechargeable battery device (1) is operatively connected to said parking and/or charging installation (10, 10a, 10b).

According to a further non-limiting aspect, in accordance with any one of the twenty preceding aspects, said mechanical switch (30) and/or said electronic switch (6k) is switched from said closed configuration to said open configuration when said rechargeable battery device (1) is operatively connected to said parking and/or charging installation (10, 10a, 10b).

According to a further non-limiting aspect, in accordance with any one of the twenty-one preceding aspects, said mechanical switch (30) and/or said electronic switch (6k) is switched from said closed configuration to said open configuration when the coupling element (5) of the rechargeable battery device (1) is arranged at said engagement element (12).

In accordance with the present disclosure, a rechargeable battery device (1) is further disclosed, preferably for gardening and/or agriculture, configured to be removably retained by, and to cooperate with, a parking and/or charging installation (10, 10a, 10b), comprising:
- a body (2),
- an electrical power user (3) applied to said body (2),
- at least one rechargeable battery (4) operatively connected to said electrical power user (3) and
- at least one coupling element configured to removably engage with an engagement element (12), in particular a housing, of said installation (10), in at least one predefined positional relationship with respect to a casing of said installation (10), so as to establish a removable connection condition between said installation and said device (1),
characterized in that said device (1) further comprises an interlocking device (30, 6k), configured to inhibit a power supply of the electrical power user (3) when said device (1) with rechargeable batteries is received by said engagement element (12), said interlocking device (30, 6k) being configured to be activated, optionally automatically activated, in conjunction with said removable connection condition.

According to a further non-limiting aspect, in accordance with the preceding aspect, said device is configured to exhibit an operating configuration of use, in which said interlocking device (30, 6k) enables the power supply of the power user (3) by said at least one rechargeable battery (4).

According to a further non-limiting aspect, in accordance with any one of the two preceding aspects, said device is configured to exhibit a charging operating configuration, alternative to said operating configuration of use, in which said interlocking device (30, 6k) inhibits the power supply of the power user (3) by said at least one rechargeable battery (4).

According to a further non-limiting aspect, in accordance with any one of the three preceding aspects, said interlocking device (30, 6k) is an electrical interlocking device.

According to a further non-limiting aspect, in accordance with any one of the four preceding aspects, said interlocking device (30, 6k) interrupts, in said charging operating configuration, at least one flow of electric current towards said power user (3).

According to a further non-limiting aspect, in accordance with any one of the five preceding aspects, the interlocking device (30, 6k) is particularly configured to keep the power supply of the electrical power user (3) of said device (1) by said at least one rechargeable battery (4) inhibited as long as said device (1) is kept connected to said installation.

According to a further non-limiting aspect, in accordance with any one of the six preceding aspects, the device comprises a control command (1c) configured to determine a temporary power supply of said power user (3) by said at least one rechargeable battery (4).

According to a further non-limiting aspect, in accordance with the preceding aspect, said control command (1c) comprises at least one switch configured to exhibit a closed configuration in which said at least one rechargeable battery (4) is electrically connected with said power user (3) and/or supplies said power user (3) with at least a predetermined electrical power.

According to a further non-limiting aspect, in accordance with any one of the two preceding aspects, said control command (1c) comprises at least one switch configured to exhibit an open configuration in which said at least one rechargeable battery (4) does not power said power user (3).

According to a further non-limiting aspect, in accordance with any one of the three preceding aspects, said control command (1c) comprises at least one power regulator, configured to vary an electrical power supply provided in use by said at least one rechargeable battery (4) to said power user (3) at least between a minimum value and a maximum value.

According to a further non-limiting aspect, in accordance with any one of the ten preceding aspects, said at least one rechargeable battery (4) is removably associated with said body (2).

According to a further non-limiting aspect, in accordance with any one of the eleven preceding aspects, said body (2) comprises at least one housing configured to accommodate and/or retain said at least one rechargeable battery (4) in a predetermined position and/or spatial orientation with respect to said body (2).

According to a further non-limiting aspect, in accordance with any one of the twelve preceding aspects, said rechargeable battery (4) being preferably a lithium ion battery.

According to a further non-limiting aspect, in accordance with any one of the thirteen preceding aspects, said device comprises a battery charging unit (6), operatively connected to said at least one rechargeable battery (4) and housed at least partially, preferably integrally, inside said body (2).

According to a further non-limiting aspect, in accordance with the preceding aspect, said battery charging unit (6) is a low voltage unit, configured to be powered by a power supply unit (11) comprising a voltage lowering transformer, and/or is a direct voltage unit, configured to be powered by a power supply unit (11) comprising an alternating voltage to direct voltage converter.

According to a further non-limiting aspect, in accordance with any one of the fifteen preceding aspects, said interlocking device (30, 6k) comprises:
- a mechanical switch (30) positioned on said body (2) and/or on said coupling element, and/or
- an electronic switch (6k), optionally said electronic switch (6k) being or comprising one among a relay switching circuit, a solid state transistor, a field effect transistor, in particular a MOS, an IGBT, a thyristor.

According to a further non-limiting aspect, in accordance with any one of the sixteen preceding aspects, said interlocking device (30, 6k), in particular said mechanical switch (30) and/or said electronic switch (6k), is operatively interposed between said at least a first rechargeable battery (4) and said power user (3) or is placed in series with said at least one rechargeable battery (4).

According to a further non-limiting aspect, in accordance with any one of the seventeen preceding aspects, said interlocking device (30, 6k) is switchable between a closed configuration in which said at least one rechargeable battery (4) can power said power user (3), and an open configuration in which said at least one rechargeable battery (4) cannot supply power, and is electrically disconnected from, said power user (3).

According to a further non-limiting aspect, in accordance with any one of the eighteen preceding aspects, the interlocking device (30, 6k), in particular said mechanical switch (30) and/or said electronic switch (6k), is operatively placed in series with said control command (1c) and/or is an enabling element of said control command (1c).

According to a further non-limiting aspect, in accordance with any one of the four preceding aspects, said mechanical switch (30) and/or said electronic switch (6k), is configured to be automatically switched from said closed configuration to said open configuration and to remain in said open configuration, when said coupling element is engaged in said engagement element (12).

According to a further non-limiting aspect, in accordance with any one of the five preceding aspects, said mechanical switch (30) and/or said electronic switch (6k), is configured to be automatically switched from said open configuration to said closed configuration, and to remain in said closed configuration, when said coupling element is removed from said engagement element (12).

According to a further non-limiting aspect, in accordance with any one of the six preceding aspects, said electronic switch (6k) is configured to be automatically switched from said closed configuration to said open configuration and to remain in said open configuration, by effect of a control signal transceived between the rechargeable battery device (1) and the installation when said coupling element is engaged in said engagement element (12).

According to a further non-limiting aspect, in accordance with any one of the seven preceding aspects, said electronic switch (6k) is configured to be automatically switched from said open configuration to said closed configuration, and to remain in said closed configuration, when said coupling element is removed from said engagement element (12).

According to a further non-limiting aspect, in accordance with any one of the twenty-three preceding aspects, said device comprises a charging connector for said at least one rechargeable battery (4).

According to a further non-limiting aspect, in accordance with the preceding aspect, said charging connector is:
- a wireless charging connector, optionally positioned on said coupling element and/or forming part of said coupling element and configured to be operatively coupled to an electrical energy transfer element for electromagnetic coupling (11m) of a power supply unit (11), or
- a wired charging connector, optionally positioned on said coupling element and/or forming part of said coupling element and configured to be operatively coupled to an electrical energy transfer element for direct electric coupling (11e) of a power supply unit (11).

According to a further non-limiting aspect, in accordance with any one of the twenty-five preceding aspects, said rechargeable battery device (1) comprises a charging connector for said at least a first rechargeable battery (4).

According to a further non-limiting aspect, in accordance with the preceding aspect, said charging connector is:
- a wireless charging connector, optionally positioned on and/or part of said coupling element (5) and configured to be operatively coupled with an electrical energy transfer element for electromagnetic coupling (11m) of a power supply unit (11), or
- a wired charging connector, optionally positioned on, and/or part of said coupling element (5) and configured to be operatively coupled with an electrical energy transfer element for direct electric coupling (11e) of a power supply unit (11).

In accordance with the present disclosure, a charging method is further disclosed for at least one rechargeable battery (4) of a device (1) with rechargeable batteries, preferably for gardening and/or agriculture, comprising:
- a removable connection of a device (1) with rechargeable batteries, preferably for gardening and/or agriculture, to a parking and/or charging installation (10, 10a, 10b), said removable connection determining an engagement between a coupling element of the device (1), and an engagement element (12), in particular a housing, of the installation and determining a charging of said at least one rechargeable battery (4) by a power supply unit (11) operatively associated with said installation and optionally at least partially housed in said installation and
- a drive of an interlocking device (30, 6k), said drive of said interlocking device (30, 6k) resulting from said removable connection and causing an inhibition of a power supply of an electrical power user (3) of said device (1), from at least a first rechargeable battery (4) when said device (1) is removably connected to said installation.

According to a further non-limiting aspect, in accordance with the preceding aspect, the drive of said interlocking device (30, 6k) determines, or is determined by, a switching between:
- an operating configuration of use of said parking and/or charging installation (10, 10a, 10b) and/or of said rechargeable battery device (1), in which said interlocking device (30, 6k) enables the power supply of the power user (3) by said at least a first rechargeable battery (4); and
- an operating charging configuration of said parking and/or charging installation (10, 10a, 10b) and/or of said rechargeable battery device (1), alternative to said operating configuration of use, in which said interlocking device (30, 6k) inhibits the power supply of the power user (3) by said at least a first rechargeable battery (4).

According to a further non-limiting aspect, in accordance with any one of the two preceding aspects, said interlocking device (30, 6k) is an electrical interlocking device.

According to a further non-limiting aspect, in accordance with any one of the three preceding aspects, the drive of said interlocking device (30, 6k) interrupts, in said charging operating configuration, at least one flow of electric current towards said power user (3).

According to a further non-limiting aspect, in accordance with any one of the four preceding aspects, the drive of said interlocking device (30, 6k) determines an inhibition of the power supply of the electrical power user (3) of said device (1) from said at least one rechargeable battery (4) inhibited as long as said device (1) is kept connected to said installation.

According to a further non-limiting aspect, in accordance with any one of the five preceding aspects, the operation of said interlocking device (30, 6k), determines a switching of a mechanical switch (30) and/or an electronic switch (6k), optionally said electronic switch (6k) being or comprising one of a relay switching circuit, a solid state transistor, a field effect transistor, in particular a MOS, an IGBT, a thyristor.

According to a further non-limiting aspect, in accordance with any one of the six preceding aspects, said interlocking device (30, 6k), in particular said mechanical switch (30) and/or said electronic switch (6k), is operatively interposed between said at least a first rechargeable battery (4) and said power user (3) or is placed in series with said at least one rechargeable battery (4).

According to a further non-limiting aspect, in accordance with any one of the two preceding aspects, said switching is a switching between a closed configuration in which said at least a first rechargeable battery (4) can power said power user (3), and an open configuration in which said at least a first rechargeable battery (4) cannot supply power, and is electrically disconnected from, said power user (3).

According to a further non-limiting aspect, in accordance with any one of the eight preceding aspects, the interlocking device (30, 6k), in particular said mechanical switch (30) and/or said electronic switch (6k), is arranged in at least one of said rechargeable battery device (1) and said parking and/or charging installation (10, 10a, 10b).

According to a further non-limiting aspect, in accordance with any one of the nine preceding aspects, said rechargeable battery device (1) comprises a control command (1c) configured to determine a temporary power supply of said power user (3) by said at least a first rechargeable battery (4).

According to a further non-limiting aspect, in accordance with the preceding aspect, said control command (1c) comprises at least one switch having a closed configuration in which said at least a first rechargeable battery (4) is electrically connected with, and powers with at least a predetermined electrical power the, power user (3), and an open configuration in which said at least a first rechargeable battery (4) does not power said power user (3), and/or comprises at least one power regulator, configured to vary an electrical power supplied in use by said at least a first rechargeable battery (4) to said power user (3) at least between a first minimum value and a second maximum value.

According to a further non-limiting aspect, in accordance with any one of the eleven preceding aspects, the operation of said interlocking device (30, 6k), in particular said mechanical switch (30) and/or said electronic switch (6k), results in a disabling of said control command (1c).

According to a further non-limiting aspect, in accordance with any one of the five preceding aspects, the switching of said mechanical switch (30) and/or of said electronic switch (6k) occurs automatically from said closed configuration to said open configuration, which is kept open, when said coupling element (5) is connected on said engagement element (12).

According to a further non-limiting aspect, in accordance with any one of the six preceding aspects, said open configuration is automatically switched back to said closed configuration and remains in said closed configuration, when said coupling element (5) is removed from said engagement element (12).

According to a further non-limiting aspect, in accordance with any one of the seven preceding aspects, the switching of said electronic switch (6k) occurs automatically from said closed configuration to said open configuration, which is kept open, when said coupling element (5) is connected to said engagement element (12) and is automatically switched back to said closed configuration and remains in said closed configuration, when said coupling element (5) is removed from said engagement element (12) and by effect of a control signal transceived between the rechargeable battery device (1) and the parking and/or recharging installation (10, 10a, 10b).

According to a further non-limiting aspect, in accordance with any one of the fifteen preceding aspects, the removable connection of a rechargeable battery device (1) on a parking and/or charging installation (10, 10a, 10b) comprises the coupling of a charging connector for said at least a first rechargeable battery (4).

According to a further non-limiting aspect, according to the preceding aspect, said charging connector is arranged on said rechargeable battery device (1).

According to a further non-limiting aspect, in accordance with any one of the two preceding aspects, said charging connector is:
- a wireless charging connector, optionally positioned on and/or part of said coupling element (5) and configured to be operatively coupled with an electrical energy transfer element for electromagnetic coupling (11m) of a power supply unit (11), or
- a wired charging connector, optionally positioned on, and/or part of said coupling element (5) and configured to be operatively coupled with an electrical energy transfer element for direct electric coupling (11e) of a power supply unit (11).

According to a further non-limiting aspect, in accordance with the preceding aspect, said coupling takes place with said electrical energy transfer element for electromagnetic coupling (11m) and/or with said electrical energy transfer element for direct electrical coupling (11e).

According to a further non-limiting aspect, in accordance with any one of the sixteen preceding aspects, the method comprises powering said electronic switch (6k), preferably said relay switching circuit, by means of the power supply unit (11).

According to a further non-limiting aspect, in accordance with any one of the seventeen preceding aspects, the method comprises powering said electronic switch (6k), preferably said relay switching circuit, in direct current or direct voltage.

According to a further non-limiting aspect, in accordance with any one of the eighteen preceding aspects, the method comprises powering said electronic switch (6k), preferably said relay switching circuit, with a voltage lowering transformer and/or a voltage rectifier of said power supply unit (11).

According to a further non-limiting aspect, in accordance with any one of the nineteen preceding aspects, said electronic switch (6k) is integrated in said battery charging unit (6).

### Figures

That which forms the subject matter of the present disclosure is described in relation to some preferred and non-limiting embodiments in the following part of the disclosure. The following part of the disclosure refers to the attached figures, a brief disclosure of which is provided below.
Figure 1 illustrates a parking and/or recharging installation and a rechargeable battery device; the parking and/or recharging installation is provided with a mechanical switch forming an interlocking device adapted to prevent the actuation of a power user of the rechargeable battery device when this is connected to the parking and/or recharging installation.
Figure 2 illustrates a parking and/or charging installation and a rechargeable battery device; the rechargeable battery device is provided with a mechanical switch forming an interlocking device adapted to prevent the actuation of a power user of the rechargeable battery device when this is connected to the parking and/or charging installation.
Figure 3 illustrates a parking and/or charging installation and a rechargeable battery device; the parking and/or charging installation is provided with an electronic switch forming said interlocking device.
Figure 4 illustrates a housing and a rechargeable battery device; the rechargeable battery device is provided with an electronic switch forming said interlocking device.
Figure 5 illustrates a perspective view of a contact portion of the parking and/or charging installation.
Figure 6 illustrates a basic diagram illustrating a hierarchy of the interlocking device with respect to a control switch of the rechargeable battery device in the power supply of the power user.
Figure 7 illustrates a circuit diagram of a battery charger partially located on the parking and/or charging installation and partially arranged within said rechargeable battery device.

### Detailed description

As briefly disclosed in the summary, the Applicant has observed:
- the existence of risk to the operator where the power user is driven unintentionally, and
- the existence of a risk for the electronics of the battery charger in the power request which the power user of the rechargeable battery device would have on the charger if driven.

In particular, the risk in accordance with the second point is such as to cause overheating or breakage of one or more of the electrical components of the battery charger, which is typically sized to provide electrical currents of a value which can even be less than 10 times the electrical current required by a power user.

In an embodiment, the parking and/or charging installation 10, 10a, 10b for rechargeable battery devices 1 and the corresponding rechargeable battery device 1 are provided with an interlocking device 30, 6k so as to prevent the actuation of the power user when the battery charger is operatively connected with the rechargeable battery device.

When the rechargeable battery device 1 is installed on the parking and/or charging installation 10, 10a, 10b, there is practically never a condition in which it should be activated. For this reason, the presence of the interlocking device 30, 6k does not substantially place any limitation on the use of the rechargeable battery device 1.

The technical function related to the prevention of damage to the power supply unit forming the battery charger is particularly important where the at least one rechargeable battery of the rechargeable battery device 1 is capable of storing large amounts of electrical energy. This is particularly true for lithium batteries, which can preferably be used as batteries for the rechargeable battery device 1.

In particular, in an embodiment, the rechargeable battery device 1 can be powered with a lithium battery of one of the following types: Lithium - Cobalt - Oxide (LiCoO), Lithium - Manganese - Oxide (LiMn₂O), Lithium - Iron - Phosphate (LiFePO₄, Lithium with Nickel - Manganese - Cobalt (LiNiₓMn_{y}Co_{z}O₂) or Lithium with Nickel - Cobalt - Aluminium (LiNiCoAlO₂) or Lithium titanate (Li₄Ti₅O₁₂).

Therefore, in general, the present disclosure aims to disclose a method for charging at least one rechargeable battery 4 of a rechargeable battery device 1, preferably for gardening and/or agriculture.

The method which is the subject matter of the present disclosure comprises:
- a removable connection of a device 1 with rechargeable batteries to a parking and/or charging installation 10, 10a, 10b, said removable connection determining an engagement between a coupling element of the device 1, and an engagement element 12, in particular a housing, of the installation and determining a charging of said at least one rechargeable battery 4 by a power supply unit 11 operatively associated with said installation and optionally at least partially housed in said installation and
- a drive of an interlocking device 30, 6k, said drive of said interlocking device 30, 6k resulting from said removable connection and causing an inhibition of a power supply of an electrical power user 3 of said device 1, from at least a first rechargeable battery 4 when said device 1 is removably connected to said installation.

As will be better clarified following the completion of the reading of the present detailed disclosure, the interlocking device 30, 6k is specifically configured to keep the power supply of the electrical power user 3 of said rechargeable battery device 1 by said at least a first rechargeable battery 4 inhibited as long as said rechargeable battery device 1 is kept connected in use on said housing 1.

The interlocking device 30, 6k is an electrical interlocking device, i.e., it is designed to operate a direct or indirect inhibition of the supply of electrical energy, or electrical power, and therefore at least one flow of electrical current, to the power user 3 of the rechargeable battery device 1.

In a non-limiting embodiment, the interlocking device 30, 6k comprises a mechanical switch 30 and/or an electronic switch 6k. Non-limiting examples of electronic switches can comprise bipolar transistors, field effect transistors (in particular MOS), thyristors, IGBTs. The interlocking device can comprise sensor means which switch the electronic switch 6k.

Although the present disclosure refers to an embodiment in which the interlocking device 30, 6k is mounted at either the parking and/or charging installation 10, 10a, 10b, or the rechargeable battery device 1, the Applicant considers herein disclosed, as inter alia conceived, embodiments in which the interlocking device is situated on both the parking and/or charging installation 10, 10a, 10b and on the rechargeable battery device 1.

In order to ensure maximum safety against accidental activation of the power user 3, embodiments can be provided in which at least one of the interlocking devices situated on the parking and/or charging installation 10, 10a, 10b and on the rechargeable battery device 1 are provided with both a mechanical switch 30 and an electronic switch 6k.

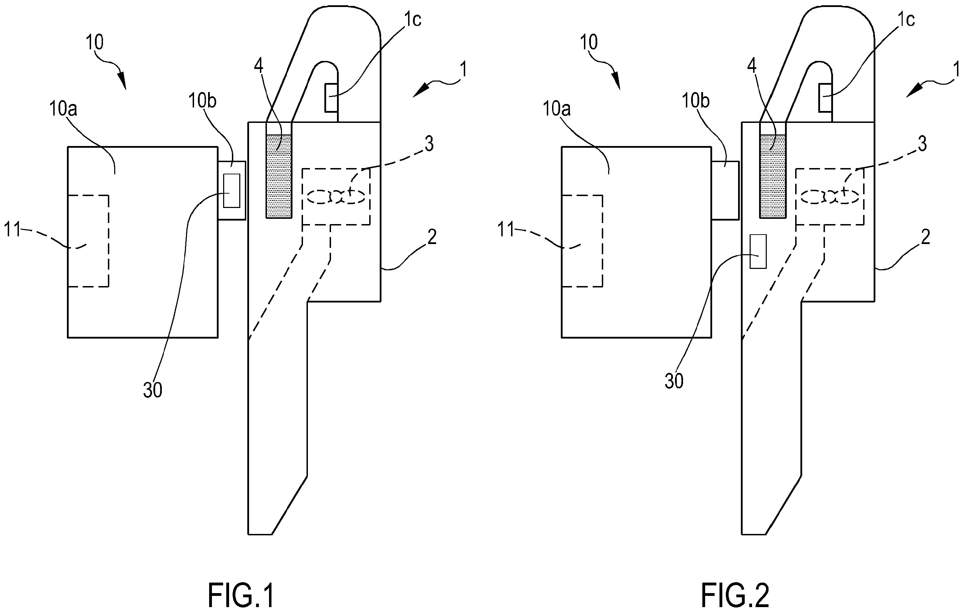

Figures 1 to 4 illustrate a non-limiting embodiment of the rechargeable battery device 1 in the form of a blower.

In accordance with the present disclosure the rechargeable battery device 1 can be a gardening and/or agricultural device. In a non-limiting manner, said device for gardening and/or agriculture is for example a device for cutting the lawn, in particular a lawnmower, optionally automatic, or device for trimming lawns and hedges, in particular a hedge trimmer or a turf trimmer or a brush cutter, or a device for timber and pruning, in particular a branch cutter, or a bio-grinder, or a chainsaw, or a cleaning device, in particular a blower or aspirator, or a shredder, or a pressure washer, or a sweeper or a snow plough, or a device for preparing soil, in particular an aerator or scarifier or a tiller, or a device for irrigating or distributing substances, in particular a sprinkler, or a pump or an atomiser, or a pump for distributing anti-fungal substances. Alternatively, the device which is the subject matter of the present disclosure can be a device for scanning and/or inspecting soils, in particular a device for searching for metals.

In an embodiment, said rechargeable battery device 1, and in particular said gardening and/or agricultural device, is intended to be hung. For the purposes of the present disclosure, it is therefore understood that "hung" implies the unloading of the weight of the device disclosed herein on the parking and/or charging installation 10, 10a, 10b. Also, in an embodiment, said parking and/or charging installation 10, 10a, 10b is configured to be hung, in particular on a wall.

In the case of the blower of figures 1 to 4, the power user 3 is a connected electric motor whose shaft is keyed on a fan which pushes air along a conduit, flexible or substantially rigid.

A control command 1c is provided to allow to control at least the power supply or disconnection of the power user 3. In an embodiment, such a control command 1c is configured to allow to adjust an electrical power supplied and/or absorbed by the power user 3; preferably such a control command 1c allows to adjust at least one of a voltage and/or a current supplied to the electric motor.

Therefore, the control command 1c can comprises at least one power regulator, configured to vary an electrical power supply provided in use by said at least one rechargeable battery 4 to said power user 3 at least between a first minimum value and a second maximum value. Non-limiting examples of power controls can be rheostats or PWM controllers.

Examples of electric motors which can be installed on the rechargeable battery device 1 which is the subject matter of the present disclosure can be of the direct current, alternating current, brushed, brushless, stepper type.

The rechargeable batteries 4 are removably housed at a respective first and second substantially outer portion of said body 2. The first and the second portion are substantially opposite and placed near a handle of the rechargeable battery device 1.

The body of the rechargeable battery device 1 is provided with seats for the rechargeable batteries 4. In accordance with the specific power needs required by the rechargeable battery device 1, there can be a single seat for a single rechargeable battery 4 on the body 2, or a plurality of seats for a respective plurality of rechargeable batteries 4.

The reference numeral 10 identifies a parking and/or charging installation, which comprises at least two portions:
- a support portion 10a, preferably configured to be fixed to a wall,
- at least one contact portion 10b having an engagement element 12 for allowing to connect the device for gardening and/or agriculture 1.

The support portion 10a and the contact portion 10b can be part of a casing of the parking and/or charging installation.

In a particular and non-limiting embodiment of the parking and/or charging installation 10,10a, 10b, there are a plurality of seats of the support portion 10a.

The overall assembly formed by the plurality of seats allows to accommodate a contact portion 10b in a plurality of different positions on said support portion and/or allows to simultaneously accommodate a plurality of contact portions 10b.

Preferably, but not limitedly, the parking and/or charging installation 10, 10a, 10b is made of plastic material; in a non-limiting embodiment, at least one among the support portion 10a and the contact portion 10b is made of plastic material, for example by means of a moulding production process. For example, it is possible to make the contact portion 10b by injection moulding. Making the parking and/or charging installation, in whole or in part, by means of plastic material, and in particular by injection moulding advantageously allows to produce a large number of pieces at low cost, while maintaining a high production quality. It is noted that the plastic material can be replaced by equivalent glass fibre, even reinforced.

The use of plastic material prevents the transmission of electrical currents to the operator, in particular where the electrical conductors which are present on the parking and/or charging installation 10, 10a, 10b are partially uncovered. In an embodiment, at least part of the parking and/or charging installation 10, 10a, 10b, and preferably at least the surface portions thereof, susceptible in use to come into contact with parts of the body of the operator, are electrically insulating.

Figure 1 illustrates a parking and/or charging installation and a rechargeable battery device; the parking and/or charging installation 10, 10a, 10b is provided with a mechanical 30 forming an interlocking device 30, 6k. As can be seen from the schematic representation of figure 1, in an embodiment the mechanical switch 30 is arranged at the contact portion 10b of the parking and/or charging installation 10, 10a, 10b.

Figure 2 illustrates a parking and/or charging installation 10, 10a, 10b and a rechargeable battery device 1 in which the rechargeable battery device 1 is provided with a mechanical switch 30 forming the interlocking device 30, 6k. In a non-limiting embodiment, the mechanical switch 30 is arranged at the coupling element 5 of the rechargeable battery device 1.

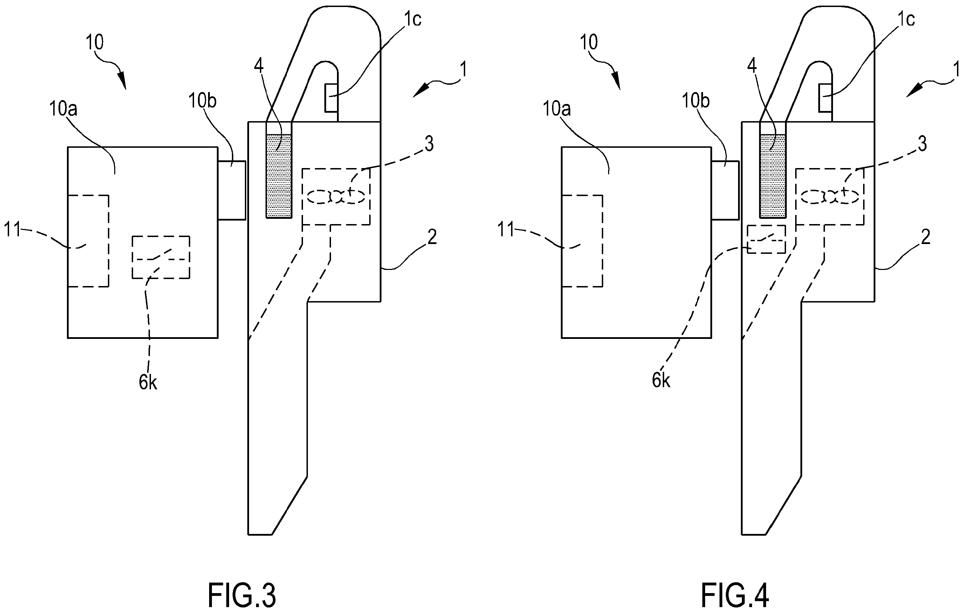

Figure 3 illustrates a parking and/or charging installation 10, 10a, 10b and a rechargeable battery device 1 in which the parking and/or charging installation 10, 10a, 10b is provided with an electronic switch 6k forming said interlocking device 30, 6k. In an embodiment the electronic switch 6k can be arranged at the contact portion 10b of the parking and/or charging installation 10, 10a, 10b.

Figure 4 illustrates a parking and/or charging installation 10, 10a, 10b and a rechargeable battery device in which the rechargeable battery device 1 is provided with an electronic switch 6k forming said interlocking device 30, 6k. In a non-limiting embodiment, the electronic switch 6k can be arranged at the coupling element 5 of the rechargeable battery device 1.

The rechargeable battery device 1 is provided with a charging connector for the at least one rechargeable battery 4 housed therein. Such a charging connector is:
- a wireless charging connector, optionally positioned on and/or part of said coupling element 5 and configured to be operatively coupled with an electrical energy transfer element for electromagnetic coupling 11m of a power supply unit 11 intended to charge the at least one rechargeable battery 4 of the device described herein, or
- a wired charging connector, optionally positioned on, and/or part of said coupling element 5 and configured to be operatively coupled with an electrical energy transfer element for direct electric coupling 11e of a power supply unit 11 intended to charge the at least one rechargeable battery 4 of the device described herein.

In an embodiment, which must not be considered limiting, the parking and/or charging installation 10, 10a, 10b can be provided with a power supply unit 11 which is intended to provide electrical energy to the aforesaid transfer element for charging the at least one rechargeable battery positioned on board the rechargeable battery device 1. Preferably, the power supply unit 11 is at least partially included in a casing of the parking and/or charging installation.

From the electrical point of view, said power supply unit 11 can comprise a first electronic conditioning circuit for electrical signal which is intended to at least partially recharge the at least one rechargeable battery 4 which meanwhile is kept installed on the rechargeable battery device 1.

In detail, the first electronic conditioning circuit is configured to cooperate with a second conditioning circuit of said electrical signal; said second conditioning circuit of said electrical signal is housed on the battery charging unit 6 which is arranged on the rechargeable battery device 1. This technical feature implies that the battery charging electronics are shared between the parking and/or charging installation 10, 10a, 10b and the rechargeable battery device 1.

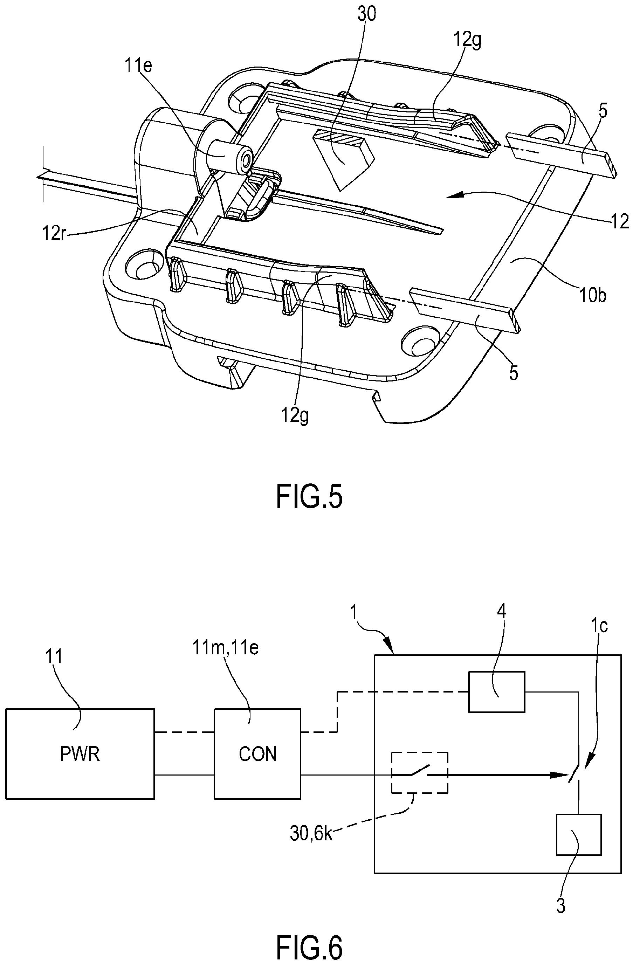

A non-limiting form of mechanical switch 30 arranged on the parking and/or charging installation 10, 10a, 10b and in particular on the contact portion 10b is depicted in figure 5.

Figure 5 illustrates a perspective view of a non-limiting embodiment of a contact portion 10b. In such an embodiment, it is observed that the aforementioned engagement element 12 is arranged on the contact portion 10b. In general, the engagement element 12 comprises at least one among a guide, a recess, a protuberance; in the embodiment illustrated in figure 6 it comprises a pair of opposite and substantially parallel guides which, in use, engage on respective counter-guides arranged on the body 2 of the rechargeable battery device 1. The opposite guides, which in figure 6 are indicated with the reference number 12g, guide the body 2 in sliding towards an abutment 12r which is made by a substantially inclined bottom wall, in particular substantially orthogonal, with respect to the guides 12g.

The engagement element 12, also thanks to the presence of the guides 12g and the abutment 12r, defines an operating coupling position in which said rechargeable battery device 1 is in a predefined spatial arrangement with at least one among said support portion 10a and said contact portion 10b. In the embodiment of figure 5, the guides 12g project orthogonally with respect to a front plane of the contact portion 10b.

Regardless of whether the engagement element 12 is arranged on the contact portion 10b or on the support portion 10a, said engagement element 12 preferably comprises an electrical energy transfer element for electromagnetic coupling 11m and/or an electrical energy transfer element for direct electrical coupling 11e, preferably in a protected position.

In a non-limiting embodiment, the electrical energy transfer element for electromagnetic coupling 11m comprises an electromagnetic connector which transfers electrical energy (signal) for recharging the rechargeable battery 4 by means of an at least partially wireless channel.

In a non-limiting embodiment, the electrical energy transfer element for direct electrical coupling 11e comprises a connector, preferably metallic, which in figure 5 is a male connector projecting along a substantially inclined direction, and preferably substantially orthogonal, with respect to the abutment 12r.

In an embodiment, which is depicted in figure 5, the electrical energy transfer element for direct electrical coupling 11e is arranged substantially at said abutment 12r and extends along a direction substantially parallel to the direction of the guides 12g.

The electrical energy transfer element for direct electrical coupling 11e (connector) is connected to a portion, in particular an end, of electrical power cable 50 in use interposed between said support portion 10a and the contact portion 10b.

In an embodiment, the electrical energy transfer element for electromagnetic coupling 11m, and/or the electrical energy transfer element for direct electrical coupling 11e is at least bipolar and is configured to transport a first electrical or electromagnetic power signal for recharging said at least a first rechargeable battery 4 and a second control signal for said at least a first rechargeable battery 4.

Alternatively, or in combination with the above, the engagement element 12 can be configured to allow a rotation, preferably a rotation along an oblique direction with respect to said translation, of said rechargeable battery device 1 with respect to the casing of said parking and/or charging installation 10, 10a, 10b.

The mechanical switch 30 is arranged at one of the two guides 12g, and is compressed when the counter-guides of the coupling element 5 of the rechargeable battery device 1 are inserted on the guides 12g. In an embodiment, each of the two guides 12g can be provided with a mechanical switch 30, which is compressed when the counter-guides of the coupling element 5 of the rechargeable battery device 1 are inserted on the guides 12g.

Similarly, when the mechanical switch 30 is arranged on the rechargeable battery device 1 and in particular on the coupling element 5, it is preferably compressed when the coupling element 5 of the rechargeable battery device 1 is, in use, connected with the engagement element 12.

If the interlocking device 30, 6k disclosed herein is arranged on the parking and/or charging installation 10, 10a, 10b, it is therefore clear that such a parking and/or charging installation has:
- an operating configuration of use, in which the interlocking device 30, 6k enables the power supply of the power user 3 by said at least a first rechargeable battery 4; and
- a charging operating configuration, alternative to said operating configuration of use, in which said interlocking device 30, 6k inhibits the power supply of the power user 3 by said at least a first rechargeable battery 4.

Alternatively, or in combination, if the interlocking device 30, 6k disclosed herein is arranged on the rechargeable battery device 1, it is clear that such a device has:
- an operating configuration of use, in which the interlocking device 30, 6k enables the power supply of the power user 3 by said at least a first rechargeable battery 4; and
- a charging operating configuration, alternative to said operating configuration of use, in which said interlocking device 30, 6k inhibits the power supply of the power user 3 by said at least a first rechargeable battery 4.

It is therefore not possible to have, simultaneously, the charging operating configuration and the operating configuration of use.

Figure 6 helps to understand the hierarchy existing between the interlocking device 30, 6k and the control command 1c or, equivalently, between the interlocking device 30, 6k and the possibility of activation of the power user 3 of the rechargeable battery device 1.

The power supply unit 11 acting as a battery charger unit on the parking and/or charging installation 10, 10a, 10b is electrically connected with, and transfers electrical energy for charging the at least one rechargeable battery 4 by means of an electrical energy transfer element for electromagnetic coupling 11m and/or an electrical energy transfer element for direct electric coupling 11e (dashed arrows). In figure 6 it is assumed that the interlocking device 30, 6k is arranged on the rechargeable battery device 1.

The interlocking device 30, 6k acts as an enabling command for closing the switch created by the control command 1c, which is interposed between the rechargeable battery 4 and the power user 3. In such a case the interlocking device 30, 6k acts indirectly on the inhibition of the transmission of electrical energy to the power user 3.

As long as the interlocking device 30, 6k does not consent to the closing of the switch formed by the control command 1c, there is an inability to power the power user 3 by means of the rechargeable battery 4. Otherwise, where the interlocking device 30, 6k provides consent for the switch formed by the control command 1c to be closed, such a control command 1c can activate the supply of electrical energy to the power user.

Regardless of whether the interlocking device 30, 6k is arranged on the parking and/or charging installation 10, 10a, 10b or on the rechargeable battery device 1, said interlocking device 30, 6k, in particular said mechanical switch 30 and/or said electronic switch 6k, is operatively interposed between said at least a first rechargeable battery 4 and said power user 3 and i.e., is placed logically, or physically, in series to said at least one rechargeable battery 4. Thanks to this technical feature, the power supply of the power user 3 is enabled. If placed in series physically, there will therefore be a direct inhibition exerted by the interlocking device 30, 6k.

Said interlocking device 30, 6k, in particular said mechanical switch 30 and/or said electronic switch 6k, has:
- a closed configuration in which said at least a first rechargeable battery 4 can power said power user 3, and/or
- an open configuration in which said at least a first rechargeable battery 4 cannot power, and is electrically disconnected from, said power user 3.

The closed configuration and the open configuration are therefore alternatives.

It should be noted that the closed configuration and the open configuration disclosed herein must not necessarily be understood as relating to the physics of the switch which is formed by the mechanical switch 30 and/or by the electronic switch 3; in fact, such configurations can be considered logical configurations. In fact, there can be embodiments of the power user 3 whose control is carried out in negative logic.

In any case, the preferred embodiment of the parking and/or charging installation and the rechargeable battery device disclosed herein is such that the switching from said closed configuration to said open configuration of both said mechanical switch 30 and said electronic switch 6k occurs in use automatically upon the operational coupling of the rechargeable battery device 1 with the parking and/or charging installation 10, 10a, 10b (coupling between the engagement element 12 and the coupling element 5). Thanks to this technical feature, the operator will no longer need to remember to activate a control to block the activation of the power user 3. This is automatically activated. In an example, therefore, should the control command 1c be inadvertently activated, such a control command will be inhibited with the consequent impossibility of transmitting electrical power to the power user 3.

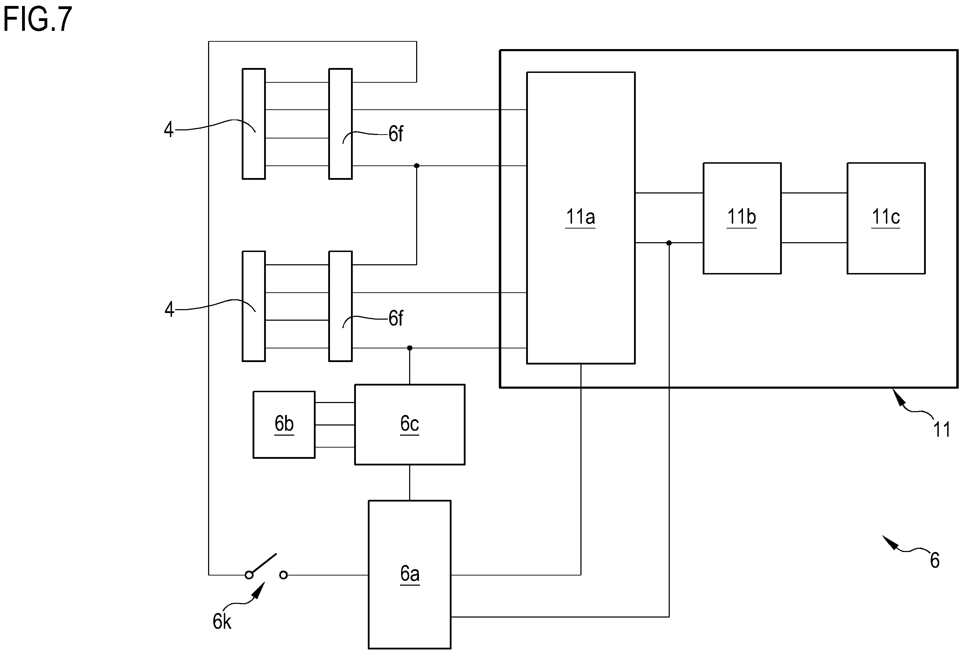

Figure 7 illustrates a circuit diagram of a non-limiting embodiment of the assembly formed by the power supply unit 11 and the battery charging unit 6. The power supply unit, which is arranged at the parking and/or charging installation, comprises: a charging adapter 11c, a charging port 11b and a control unit 11a. The charging adapter 11c can preferably accommodate a voltage transformer, in particular a voltage lowering transformer. The charging adapter 11c comprises a pair of inputs, in use removably connected to the mains voltage source, and a pair of outputs which supply the inputs of the charging port 11b.

The charging port 11b can allow the removable connection of the charging adapter 11c to the control unit 11a. In an embodiment, the charging port 11b comprises a pair of inputs in use directly supplied by the outputs of the charging adapter 11c and a plurality of outputs which go to supply the control unit 11a.

In an embodiment the control unit 11a comprises a pair of inputs which in use are directly supplied by the outputs of the charging port 11b and a plurality of outputs which supply electrical energy power to the rechargeable batteries 4. In particular, it should be noted that the control unit 11a is configured to be operatively connected to at least one pair of rechargeable batteries 4.

Preferably, but not limitedly, the control unit 11a is configured and specifically intended to supply electrical energy power to a first rechargeable battery 4 and a second rechargeable battery 4 so as to alternately charge them, switching the supply of electrical energy automatically from the first rechargeable battery 4 to the second rechargeable battery 4. In detail, the control unit 11a performs an automated procedure for which the switching between charging the first rechargeable battery to charging the second rechargeable battery occurs only when the first rechargeable battery 4 has assumed a first charge level R₁ (for example and not limitedly, 15% of the maximum recharging value) and/or when a first time T₁ has elapsed from the start time of charging the battery itself.

The technical features referred to in the preceding paragraph allow to limit the overall size and the power manageable by the electronics of the power supply unit 11, which does not have to simultaneously recharge a plurality of rechargeable batteries, at least in the initial phases of the charging where the current absorption by the rechargeable batteries is greater.

The battery charging unit 6 comprises a switching circuit which forms the electronic switch 6k, preferably a relay switching circuit, configured to prevent the actuation of the motor 6b which forms the power user 3 of the device for gardening and/or agriculture 1 when the rechargeable batteries 4 are being charged, i.e., when at least one rechargeable battery 4 receives electrical energy from the power supply unit. In an embodiment, the relay is a traditional induction relay, but in an alternative embodiment such a relay is a solid-state relay.

The battery charging unit 6 comprises a discharge controller 6c. The discharge controller 6c comprises a control input, operatively controlled by an enabling output of the switching circuit which forms the electronic switch 6k, which carries out the functions disclosed above. The discharge controller 6c comprises a set of three (in general a plurality) outputs directed to supply a power signal to the motor 6b.

The relay switching circuit is supplied by the control unit 11a, and therefore, indirectly (in the embodiment illustrated in figure 7), by the charging adapter 11c. Preferably the relay switching circuit is supplied in direct current (or voltage), and such direct current or voltage is taken from the charging adapter 11c and is therefore taken from a voltage lowering transformer, operating in alternating current, of the power supply unit 11 and from a rectifier stage (operating an AC - DC conversion) of the power supply unit 11.

In an embodiment, the excitation of the relay switching circuit, which determines the function of inhibiting the transmission of electrical energy to the power user, is automatically given by means of an electronic control signal exchanged between the battery insert 6f and the relay switching circuit, and such a control signal inhibits a power contact of the battery insert 6f which allows to provide electrical power to the power user.

The discharge controller 6c further comprises at least one power input receiving an electrical signal from the at least one rechargeable battery 4.

In a non-limiting embodiment, the discharge controller 6c is configured to regulate a power delivered to the motor 6b, and in particular a voltage and/or a current delivered to the motor 6b through the aforementioned outputs.

The battery charging unit 6 further comprises a pair of battery inserts 6f; there are two battery inserts 6f since there are two rechargeable batteries 4 connectable to the specific embodiment of the battery charging unit 6 of figure 10. In the event of a single rechargeable battery 4 connectable to the battery charging unit 6, there will be a single battery insert 6f.

The battery insert 6f comprises a pair of inputs supplied by the control unit 11a, a plurality of outputs supplying electrical energy power to the rechargeable battery 4 and also configured to be supplied by the electrical energy power of the rechargeable batteries 4 during the discharge step thereof.

Each battery insert 6f is also operatively connected to the discharge controller 6c and also to the switching circuit 6a, supplying the latter with a control signal which causes an excitation of the relay which in turn disconnects the power supply to the motor 6b, for example causing the switching of physical switches or the closure of a semiconductor switch channel (solid state). Each of the battery inserts 6f is configured to supply said control signal automatically immediately when receiving electrical power from the power supply unit.

Therefore in general, it is clear that the Applicant has conceived a control such that said electronic switch 6k is configured to be automatically switched from said closed configuration to said open configuration and to remain in said open configuration, due to a control signal transceived between the rechargeable battery device 1 and the parking and.or charging installation 10, 10a, 10b when said coupling element 5 is connected to said engagement element 12 and is configured to be automatically switched from said open configuration to said closed configuration, and to remain in said closed configuration, when said coupling element 5 is removed from said engagement element 12.

It is observed that in a non-limiting embodiment, the controller 11a is configured and specifically intended to prevent a flow of electrical energy from the at least one rechargeable battery 4 to the charging adapter 11c; thanks to this technical feature, it is possible to reduce the risk of discharging the rechargeable batteries 4.

In light of the above description and in light of figure 10 it is thus clear that the first conditioning circuit comprises the control unit 11a, the charging port 11b and the charging adapter 11 while the second conditioning circuit comprises the battery inserts 6f, the discharge controller 6c and the switching circuit 6a.

It is therefore again clear that the relay unit forms a switch which in logical terms is placed in series with the control command 1c and which, if disabled (when the rechargeable battery device 1 is arranged at the parking and/or recharging installation 10, 10a, 10b and the rechargeable battery 4 is consequently automatically charged), disables the power supply of the power user 3.

The invention is not limited to the embodiments illustrated in the attached figures; for this reason, the reference numerals in the claims are to be understood as having no limiting effect, and are therefore provided only to increase the intelligibility of the claims.

It is finally evident that additions, modifications or variations can be applied to the present invention, without departing from the scope of protection provided by the appended claims.

## Claims

1. Parking and/or charging installation (10, 10a, 10b) for a device (1) with rechargeable batteries, preferably for gardening and/or agriculture, comprising:
- a casing,
- a power supply unit (11) at least partially housed in said casing and configured to power, in use, at least one rechargeable battery (4) of said device (1),
- an engagement element (12), in particular a housing, associated with said casing and configured to establish a removable engagement with at least part of said device (1) with rechargeable batteries in at least one predefined positional relationship with respect to said casing so as to establish a removable connection condition between said installation and said device (1),
**characterized in that** said installation further comprises an interlocking device (30, 6k), configured to inhibit a power supply of an electrical power user (3) of said device (1) by said at least one rechargeable battery (4) when said device (1) is removably connected to said installation.

2. Installation according to claim 1, configured to exhibit:
- an operating configuration of use, in which said interlocking device (30, 6k) enables the power supply of the power user (3) by said at least one rechargeable battery (4) and
- a charging operating configuration, alternative to said operating configuration of use, in which said interlocking device (30, 6k) inhibits the power supply of the power user (3) by said at least one rechargeable battery (4),
wherein said interlocking device (30, 6k) is an electric interlocking device, said interlocking device (30, 6k) interrupting, in said charging operating configuration, at least one flow of electric current towards said power user (3), the interlocking device (30, 6k) being specifically configured to keep the power supply of the electrical power user (3) of said device (1) by said at least one rechargeable battery (4) inhibited as long as said device (1) is kept connected to said installation.

3. Installation according to claim 1 or claim 2, wherein said interlocking device (30, 6k) comprises:
- a mechanical switch (30) and/or
- an electronic switch (6k), optionally said electronic switch (6k) being or comprising one among a relay switching circuit, a solid state transistor, a field effect transistor, in particular a MOS, an IGBT, a thyristor,
wherein said interlocking device (30, 6k), in particular said mechanical switch (30) and/or said electronic switch (6k), is operatively interposed between said at least one rechargeable battery (4) and said power user (3) or is placed in series with said at least one rechargeable battery (4) and is switchable between a closed configuration in which said at least one rechargeable battery (4) can power said power user (3), and an open configuration in which said at least one rechargeable battery (4) cannot power, and is electrically disconnected from, said power user (3).

4. Installation according to one or more of the preceding claims, wherein said power supply unit (11) is configured to power a battery charging unit (6) of said device (1) with an electrical signal intended for charging at least one battery of said device (1) and wherein said power supply unit (11) comprises a first electronic conditioning circuit of said electrical signal, said first electronic conditioning circuit being configured to cooperate with a second conditioning circuit of said electrical signal, said second conditioning circuit of said electrical signal being accommodated on said battery charging unit (6).

5. Rechargeable battery device (1), preferably for gardening and/or agriculture, configured to be removably retained by, and to cooperate with, a parking and/or charging installation (10, 10a, 10b), comprising:
- a body (2),
- an electrical power user (3) applied to said body (2),
- at least one rechargeable battery (4) operatively connected to said electrical power user (3) and
- at least one coupling element configured to removably engage with an engagement element (12), in particular a housing, of said installation (10), in at least one predefined positional relationship with respect to a casing of said installation (10), so as to establish a removable connection condition between said installation and said device (1),
**characterized in that** said device (1) further comprises an interlocking device (30, 6k), configured to inhibit a power supply of the electrical power user (3) when said device (1) with rechargeable batteries is received by said engagement element (12), said interlocking device (30, 6k) being configured to be activated, optionally automatically activated, in conjunction with said removable connection condition.

6. Device according to claim 5, configured to exhibit:
- an operating configuration of use, in which said interlocking device (30, 6k) enables the power supply of the power user (3) by said at least one rechargeable battery (4) and
- a charging operating configuration, alternative to said operating configuration of use, in which said interlocking device (30, 6k) inhibits the power supply of the power user (3) by said at least one rechargeable battery (4),
wherein said interlocking device (30, 6k) being an electric interlocking device, said interlocking device (30, 6k) interrupting, in said charging operating configuration, at least one flow of electric current towards said power user (3), the interlocking device (30, 6k) being specifically configured to keep the power supply of the electrical power user (3) of said device (1) by said at least one rechargeable battery (4) inhibited as long as said device (1) is kept connected to said installation.

7. Device according to claim 5 or claim 6, comprising a control command (1c) configured to determine a temporary power supply of said power user (3) by said at least one rechargeable battery (4), wherein said control command (1c) comprises at least one switch configured to exhibit:
- a closed configuration in which said at least one rechargeable battery (4) is electrically connected with said power user (3) and/or powers said power user (3) with at least one predetermined electrical power, and
- an open configuration in which said at least one rechargeable battery (4) does not power said power user (3), and/or
wherein said control command (1c) comprises at least one power regulator, configured to vary an electrical power supply provided in use by said at least one rechargeable battery (4) to said power user (3) at least between a minimum value and a maximum value.

8. Device according to one or more of claims 5 to 7, wherein said at least one rechargeable battery (4) is removably associated with said body (2) and said body (2) comprises at least one housing configured to accommodate and/or retain said at least one rechargeable battery (4) in a predetermined position and/or spatial orientation with respect to said body (2), said rechargeable battery (4) preferably being a lithium ion battery.

9. Device according to one or more of claims 5 to 8, further comprising a battery charging unit (6), operatively connected to said at least one rechargeable battery (4) and housed at least partially, preferably integrally, within said body (2), optionally wherein said battery charging unit (6) is a low voltage unit, configured to be powered by a power supply unit (11) comprising a voltage lowering transformer, and/or is a direct voltage unit, configured to be powered by a power supply unit (11) comprising an AC to DC voltage converter.

10. Device according to one or more of claims 5 to 9, wherein said interlocking device (30, 6k) comprises:
- a mechanical switch (30) positioned on said body (2) and/or on said coupling element, and/or
- an electronic switch (6k), optionally said electronic switch (6k) being or comprising one among a relay switching circuit, a solid state transistor, a field effect transistor, in particular a MOS, an IGBT, a thyristor,
wherein said interlocking device (30, 6k), in particular said mechanical switch (30) and/or said electronic switch (6k), is operatively interposed between said at least a first rechargeable battery (4) and said power user (3) or is placed in series with said at least one rechargeable battery (4) and is switchable between a closed configuration in which said at least one rechargeable battery (4) can power said power user (3), and an open configuration in which said at least one rechargeable battery (4) cannot power, and is electrically disconnected from, said power user (3).

11. Device according to one or more of claims 5 to 10, wherein said interlocking device (30, 6k), in particular said mechanical switch (30) and/or said electronic switch (6k), is operatively placed in series with said control command (1c) and/or is an enabling element of said control command (1c).

12. Device according to one or more of claims 5 to 11, wherein said mechanical switch (30) and/or said electronic switch (6k), is configured to be automatically switched from said closed configuration to said open configuration and to remain in said open configuration, when said coupling element is engaged in said engagement element (12) and is configured to be automatically switched from said open configuration to said closed configuration, and to remain in said closed configuration, when said coupling element is removed from said engagement element (12).

13. Device according to one or more of claims 5 to 12, wherein said electronic switch (6k) is configured to be automatically switched from said closed configuration to said open configuration and to remain in said open configuration, due to a control signal transceived between the device (1) with rechargeable batteries and the installation when said coupling element is engaged in said engagement element (12) and is configured to be automatically switched from said open configuration to said closed configuration, and to remain in said closed configuration, when said coupling element is removed from said engagement element (12).

14. Device according to one or more of claims 5 to 13, wherein said device further comprises a charging connector for said at least one rechargeable battery (4), said charging connector being:
- a wireless charging connector, optionally positioned on said coupling element and/or forming part of said coupling element and configured to be operatively coupled to an electrical energy transfer element for electromagnetic coupling (11m) of a power supply unit (11), or
- a wired charging connector, optionally positioned on said coupling element and/or forming part of said coupling element and configured to be operatively coupled to an electrical energy transfer element for direct electric coupling (11e) of a power supply unit (11).

15. Method for charging at least one rechargeable battery (4) of a device (1) with rechargeable batteries, preferably for gardening and/or agriculture, comprising:
- a removable connection of a device (1) with rechargeable batteries, preferably for gardening and/or agriculture, to a parking and/or charging installation (10, 10a, 10b), said removable connection determining an engagement between a coupling element of the device (1), and an engagement element (12), in particular a housing, of the installation and determining a charging of said at least one rechargeable battery (4) by a power supply unit (11) operatively associated with said installation and optionally at least partially housed in said installation and
- a drive of an interlocking device (30, 6k), said drive of said interlocking device (30, 6k) resulting from said removable connection and causing an inhibition of a power supply of an electrical power user (3) of said device (1), from at least a first rechargeable battery (4) when said device (1) is removably connected to said installation.
